# EUROPEAN PATENT APPLICATION

(11) **EP 1 555 619 A1**
(43) Date of publication of application: **20.07.2005**
(21) Application number: 03764218.8
(22) Date of filing: 17.07.2003
(51) Int. Cl.: G06F 13/00, H04L 12/56

(54) **COMMUNICATION CONTROL SYSTEM, COMMUNICATION CONTROL METHOD, AND RELAY DEVICE**

(30) Priority: 17.07.2002 JP 2002208729
(71) Applicant: NTT DoCoMo, Inc., Tokyo 100-6150 (JP)
(72) Inventor: SEKIGUCHI, Katsumi, c/o IP Dept., NTT DoCoMo, Inc., Chiyoda-ku, Tokyo 100-6150 (JP); TSURUMAKI, Koji, c/o IP Dept., NTT.DoCoMo, Inc., Chiyoda-ku, Tokyo 100-6150 (JP); KITAGUCHI, Masaya, c/o IP Dept. NTT DoCoMo, Inc., Chiyoda-ku, Tokyo 100-6150 (JP)
(74) Representative: HOFFMANN - EITLE
(86) International application number: PCT/JP2003/009105
(87) International publication number: WO 2004/008325

(57) **Abstract**

An object of the present invention is to reduce a load on the resource of a relay device (2) and to reduce the data-amount charging on a client, when communications are performed between a client (1) and a server (3). A communication control system according to the present invention includes: an establishment holder (66) configured to hold a response signal from being transmitted from the client-side connection terminal (7) to the client (1), when a client-side connection terminal (7) receives a connection request signal from the client (1); a decider (64) configured to detect a connection state of a server-side connection terminal (8) in response to the connection request signal, and to decide whether or not a connection can be established between the server-side connection terminal (8) and the server (1); and a relay processor (63) configured to transmit the response signal held by the establishment holder (66) and to establish communications between the client (1) and the server (3) so as to perform relay processing, depending on a result of decision made by the decider (64).

## Description

### TECHNICAL FIELD

The present invention relates to a communication control system, a communication control method and a relay device, for controlling (digital) data communications performed between a server and a client through a communication network such as the Internet.

### BACKGROUND ART

Conventionally, in a communication network such as the Internet, when a relay device, which relays data between a client and a server, receives from the client a connection request signal (TCP connection establishment request signal) based on a communication protocol such as TCP, the following procedure is carried out. The relay device unconditionally establishes a TCP connection (a connection) between the client and the relay device, regardless of the state of the server, which is the destination of the connection. At the same time, the relay device transmits a TCP connection establishment request to the server, which is the relay destination, thereby attempting the establishment of a TCP connection.

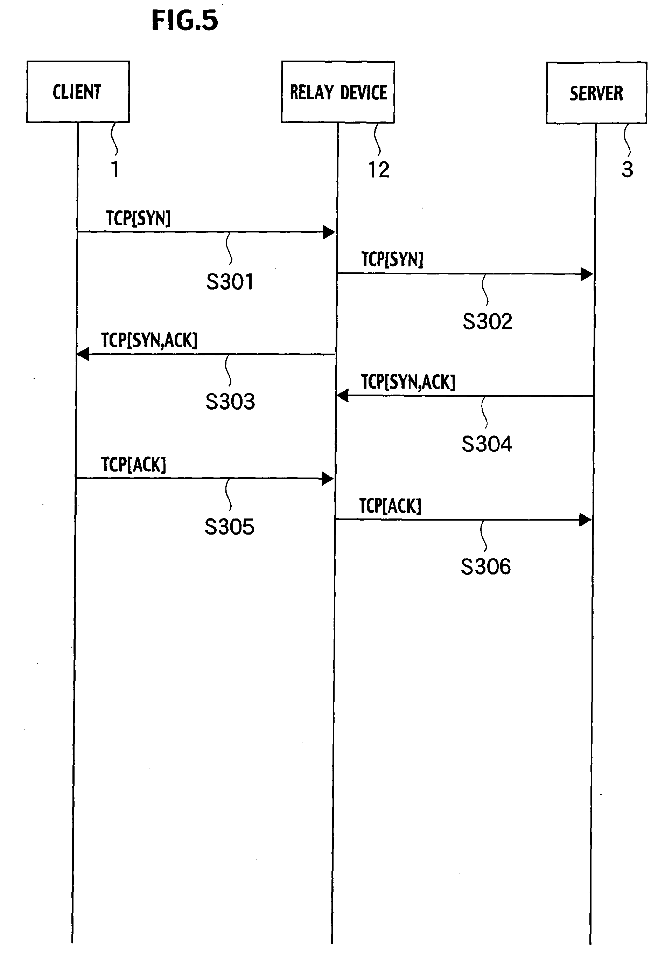

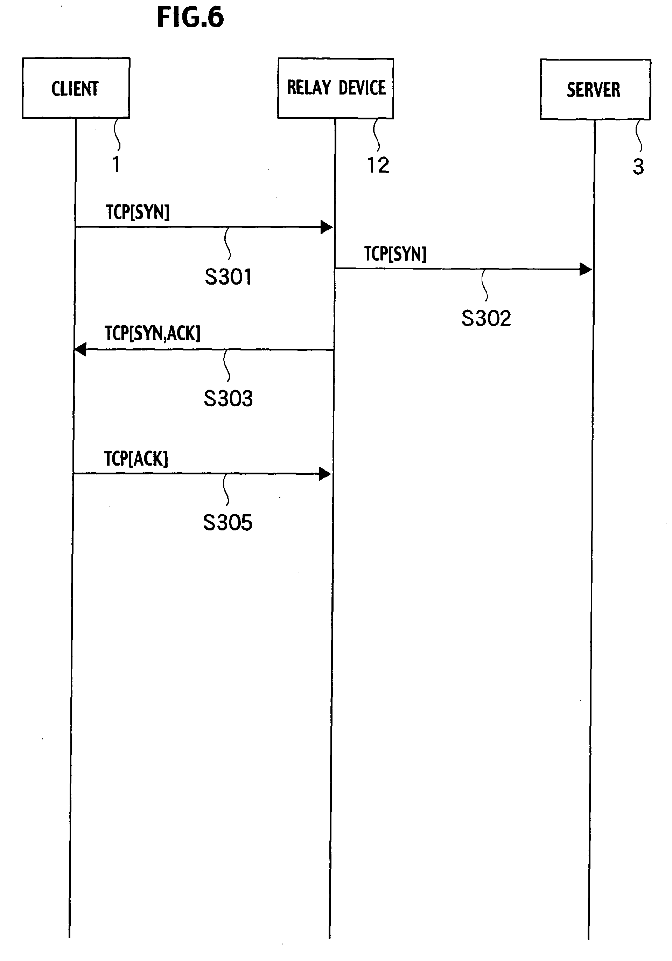

Figs. 5 and 6 show a method of establishing a TCP connection by using a conventional relay device 12. As shown in Figs. 5 and 6, according to the conventional relay device, the establishment of a TCP connection between a client 1 and the relay device 12 is performed independently of the establishment of a TCP connection between a server 3 and the relay device 12.

In this event, if the server 3, the destination of the connection, exists and also a TCP connection can be established between the relay device 12 and the server 3, then the TCP connections are established between the client 1 and the relay device 12 and between the server 3 and the relay device 12, whereby the relay device 12 will be able to relay a relay request signal from the client 1 to the server 3.

On the other hand, if the server 3, the destination of the connection, does not exist or a TCP connection cannot be established between the relay device 12 and the server 3, then a TCP connection is established between the client 1 and the relay device 21, whereas a TCP connection is not established between the server 3 and the relay device 12.

More specifically, as shown in Fig. 5, when the client 1 transmits a TCP connection establishment request signal "TCP [SYN]" in Step 301, the relay device 12 transmits a TCP connection establishment request signal "TCP [SYN]" to the server 3 in Step 302. At the same time, the relay device 12 transmits a TCP connection establishment request/acknowledgment signal "TCP [SYN, ACK]" to the client 1, thereby establishing a TCP connection between the client 1 and the relay device 12.

When the server 3 exists and also a TCP connection can be established between the relay device 12 and the server 3, then the server 3 transmits a TCP connection establishment request/acknowledgment signal "TCP [SYN, ACK]" to the relay device 12 in Step 304. The relay device 12 then relays a TCP connection establishment acknowledgment signal (ACK signal) from the client 1 to the server 3 (Steps 305 and 306).

On the other hand, as shown in Fig. 6, when the server 3 does not exist or a TCP connection cannot be established between the relay device 12 and the server 3, then the relay device 12 does not receive from the server 3 the TCP connection establishment request/acknowledgment signal "TCP [SYN, ACK]" responding to the TCP connection establishment request signal "TCP [SYN]" transmitted in Step 302, although the TCP connection has been established between the client 1 and the relay device 12 (Step 305).

However, according to the connection method for a TCP connection between a client and a server by using a relay device through such a conventional procedure, the relay device accepts a TCP connection establishment request signal from the client, without deciding whether or not the server, which is the destination of the connection for the client, is in a state capable of communication. Therefore, if the server is incapable of communication, there arise problems of the occurrence of a load on the resource of the relay device and the occurrence of data-amount charges, which is primarily unnecessary.

That is, if the relay device unconditionally establishes a TCP connection to the client, regardless of the state of the server, which is the destination of the connection for the client, the TCP connection between the relay device and the client is held in the relay device for a certain period of time, when the server does not exist or a TCP connection cannot be established between the relay device and the server. This is undesirable because the resource of the relay device is burdened.

Moreover, if, in this case, the communication network between the client and the relay device adopted a data-usage-based charging system, data transferring will be started after the establishment of a TCP connection between the client and the relay device, and some amount of communication will be generated, resulting in the occurrence of unnecessary charging. Therefore, it is undesirable to establish a TCP connection between the client and the relay device even in such a case.

### DISCLOSURE OF INVENTION

Accordingly, the present invention has been accomplished in the light of the foregoing. It is an object of the present invention to provide a communication control system, a communication control method and a relay device which can reduce a load on the resource of the relay device and reduce the data-amount charging on a client, by the relay device deciding whether or not to accept a connection request signal from the client after determining the communication state of the server side.

In order to achieve the above object, a first aspect of the present invention is summarized as a communication control system including: a server connected to a communication network; a client configured to make a connection request to the server through the communication network; a relay device configured to include a server-side connection terminal connected to the server and a client-side connection terminal connected to the client, and to relay communications between the server and the client; an establishment holder configured to hold a response signal from being transmitted from the client-side connection terminal to the client, when the client-side connection terminal receives a connection request signal from the client; a decider configured to detect a connection state of the server-side connection terminal in response to the connection request signal, and to decide whether or not a connection can be established between the server-side connection terminal and the server; and a relay processor configured to transmit the response signal held by the establishment holder, and to establish communications between the client and the server so as to perform relay processing, depending on a result of decision made by the decider.

In the first aspect of the present invention, the communication control system may be configured to include a charging processor configured to execute charging processing on the client, when communications are established between the server and the server-side connection terminal, and when communications are established between the client and the client-side connection terminal

Moreover, in the first aspect of the present invention, the decider may be configured to forward the connection request signal from the client to the server, and to decide whether or not communications can be established between the server-side connection terminal and the server, based on a response signal transmitted from the server in response to the forwarding.

Furthermore, in the first aspect of the present invention, the communication control system may be configured to include a discard processor configured to release the holding state of the establishment holder, and to transmit a discard notification to the client via the client-side connection terminal, when communications are not established between the server-side connection terminal and the server

A second aspect of the present invention is a communication control method for controlling communications between a client and a server through a relay device. The method includes: holding a response signal to the client when receiving a connection request signal from the client, in the relay device; detecting a connection state of the server-side connection terminal in response to the connection request signal, and deciding whether or not a connection can be established between the relay device and the server, in the relay device; and transmitting the response signal held, and establishing communications between the client and the server so as to perform relay processing, when it is decided that communications are established between the relay device and the server, in the relay device.

A third aspect of the present invention is a relay device which relays communications between a client and a server. The relay device includes: a client-side connection terminal connected to the client; a server-side connection terminal connected to the server; an establishment holder configured to hold a response signal from being transmitted from the client-side connection terminal to the client, when the client-side connection terminal receives a connection request signal from the client; a decider configured to detect a connection state of the server-side connection terminal in response to the connection request signal, and to decide whether or not a connection can be established between the server-side connection terminal and the server; and a relay processor configured to transmit the response signal held by the establishment holder, and to establish communications between the client and the server so as to perform relay processor, depending on a result of decision made by the decider.

In the third aspect of the present invention, the relay device may be configured to include a charging processor configured to execute charging processing on the client, when communications are established between the server and the server-side connection terminal, and when communications are established between the client and the client-side connection terminal.

Moreover, in the third aspect of the present invention, the decider may be configured to forward the connection request from the client to the server, and to decide whether or not communications can be established between the server-side connection terminal and the server, based on a response signal transmitted from the server in response to this forwarding

Furthermore, in the third aspect of the present invention, the relay device may be configured to include a discard processor configured to release the holding state of the establishment holder, and to transmit a discard notification to the client via the client-side connection terminal, when communications are not established between the server-side connection terminal and the server.

### BRIEF DESCRIPTION OF DRAWINGS

Fig. 1A is a block diagram showing a configuration of a communication control system according to one embodiment of the present invention.
Fig. 1B is a block diagram showing a configuration of a connection managing unit in a relay device according to the embodiment of the present invention.
Fig. 2 is a diagram showing a sequence of a communication control method according to the embodiment of the present invention, in the case where a server, the destination of the connection for a client, exists.
Fig. 3 is a diagram showing a sequence of the communication control method according to the embodiment of the present invention, in the case where a server, the destination of the connection for a client, does not exist.
Fig. 4 is an external view for showing computer-readable recording media, each storing a communication control program according to the embodiment of the present invention.
Fig. 5 is a diagram showing a sequence of a communication control method according to a conventional technology, in the case where a server, the destination of the connection for a client, exists.
Fig. 6 is a diagram showing a sequence of the communication control method according to the conventional technology, in the case where a server, the destination of the connection for a client, does not exist.

### BEST MODE FOR CARRYING OUT THE INVENTION

(Configuration of a Communication Control System according to One Embodiment of the Present Invention)

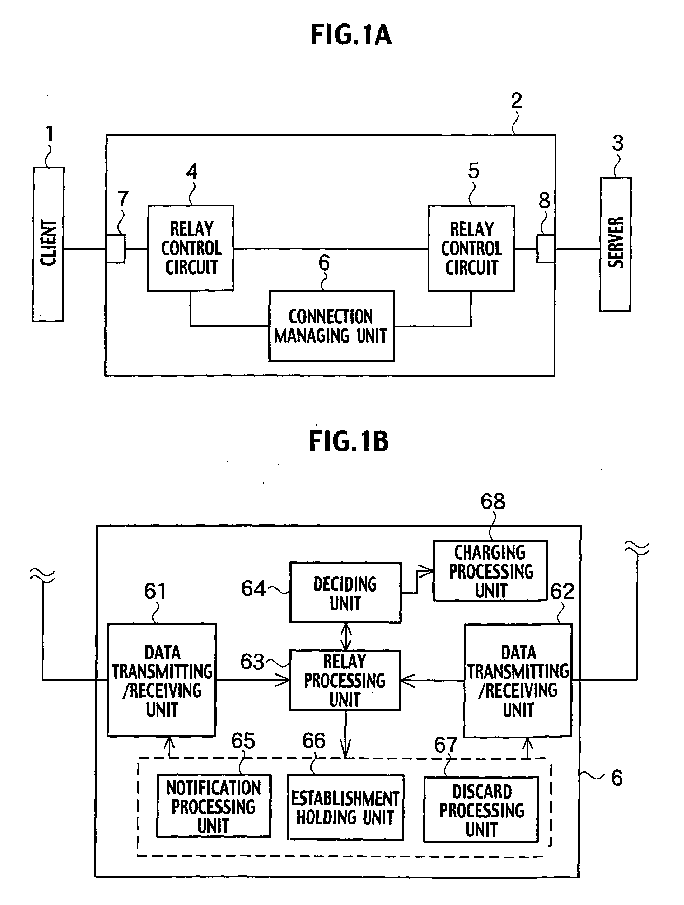

A communication control system according to one embodiment of the present invention will be described with reference to Figs. 1A and 1B.

As shown in Fig. 1A, the communication control system according to the present embodiment includes a client 1, a server 3 and a relay device 2. Here, the client 1 and the server 3 are connected to each other through a communication network such as the Internet. In addition, the relay device 2 is placed between the client 1 and the server 3.

The relay device 2 includes a client-side connection terminal 7, a server-side connection terminal 8, relay control circuits 4 and 5, and a connection managing unit 6.

The client-side connection terminal 7 is configured to connect to the client 1, and the server-side connection terminal 8 is configured to connect to the server 3. The relay control circuits 4 and 5 are connected to the client-side connection terminal 7 and the client-side connection terminal 7, respectively. The connection managing unit 6 is connected to the relay control circuits 4 and 5.

The client-side connection terminal 7 and the server-side connection terminal 8 are communication ports for transmitting/receiving data, based on a predetermined communication protocol. The client-side connection terminal 7 establishes a TCP connection to the client 1, and the server-side connection terminal 8 establishes a TCP connection to the server 3.

The connection managing unit 6 manages the state of TCP connection establishment between the client-side connection terminal 7 and the client 1, and also manages the state of TCP connection establishment between the server-side connection terminal 8 and the server 3.

Moreover, the connection managing unit 6 decides whether or not a TCP connection can be established between the relay control circuit 4 and the client 1, in accordance with the state of TCP connection establishment between the relay control circuit 5 and the server3.

Specifically, in the present embodiment, the connection managing unit 6 has data transmitting/receiving units 61 and 62, a relay processing unit 63, a deciding unit 64, a notification processing unit 65, an establishment holding unit 66, a discard processing unit 67, and a charging processing unit 68, as shown in Fig. 1B.

The data transmitting/receiving units 61 and 62 are communication circuits which transmit control signals for controlling the relaying of data signals including a TCP connection establishment request signal (connection request signal) and a TCP connection establishment acknowledgment signal (response signal), to the relay control circuits 4 and 5, respectively. Moreover, the data transmitting/receiving units 61 and 62 are communication circuits which acquire notifications of signals received by the relay control circuits 4 and 5 (a SYN reception notification, a SYN, ACK reception notification, etc.), from the relay control circuits 4 and 5, respectively.

The relay processing unit 63 is a control circuit which analyzes the contents of a SYN reception notification acquired by the data transmitting/receiving unit 61 or 62, and sends a result of this analysis to the deciding unit 64. Moreover, the relay processing unit 63 is a control circuit which outputs instructions to the notification processing unit 65, the establishment holding unit 66 and the discard processing unit 67, depending on a result of decision made by the deciding unit 64.

The deciding unit 64 is an arithmetic circuit which decides, based on the contents of a reception signal analyzed by the relay processing unit 63, whether or not a TCP connection has been established between the client 1 and the server 3, and returns a result of this decision to the relay processing unit 63.

Note that, when the deciding unit 64 has decided that a TCP connection has been established between the client 1 and the server 3, the deciding unit 64 notifies a fact to that effect to the charging processing unit 68.

The notification processing unit 65 is a signal generating circuit which, in response to an instruction from the relay processing unit 63, transmits notification signals for discard notification, SYN reception notification and the like, to the relay control circuits 4 and 5 via the data transmitting/receiving units 61 and 62, respectively.

The establishment holding unit 66 is a storage circuit which, in response to an instruction from the relay processing unit 63, stores a TCP connection establishment request signal "TCP [SYN]" acquired from the client 1 for a certain period of time, and holds a TCP connection establishment request/acknowledgment signal "TCP [SYN, ACK]" from being transmitted to the client 1.

The establishment holding unit 66 is configured to transmit the TCP connection establishment request/acknowledgment signal, which has been held, to the client 1 via the data transmitting/receiving unit 62, when it is decided that a TCP connection can be established between the relay device 2 and the server 3.

The establishment holding unit 66 is configured to delete the TCP connection establishment request signal "TCP [SYN]", which has been held, in response to an instruction from the discard processing unit 67, when, on the other hand, it is decided that a TCP connection cannot be established between the relay device 2 and the server 3.

The discard processing unit 67 is a control circuit which controls the discarding of a TCP connection establishment request signal "TCP [SYN]" held by the establishment holding unit 66, in accordance with an instruction from the relay processing unit 63 based on a result of decision made by the deciding unit 64.

The charging processing unit 68 performs charging of communication costs on the client 1, when it is decided that a TCP connection has been established between the client 1 and the server 3.

If a data-usage-based charging system is adopted, the charging processing unit 68 also has a function of measuring the data amount exchanged between the relay control circuits 4 and 5, and of performing charging of the costs depending on a result of the measurement.

The relay control circuit 4 is configured to relay a relay request signal (data signal) arriving at the client-side connection terminal 7, to the server-side connection terminal 8. The relay control circuit 5 is configured to relay a relay request signal (data signal) forwarded from the server 3 to the server-side connection terminal 8, to the client 1 via the client-side connection terminal 7.

Here, what characterizes the present invention is the provision of the connection managing unit 6 which manages the state of TCP connection establishment between the client 1 and the relay control circuits 4 and 5.

The relay device 2 according to the present embodiment can be realized by installing a communication control program in a digital arithmetic circuit with an operating system executed thereon.

### (Communication Control Method using the Communication Control System according to the Present Embodiment)

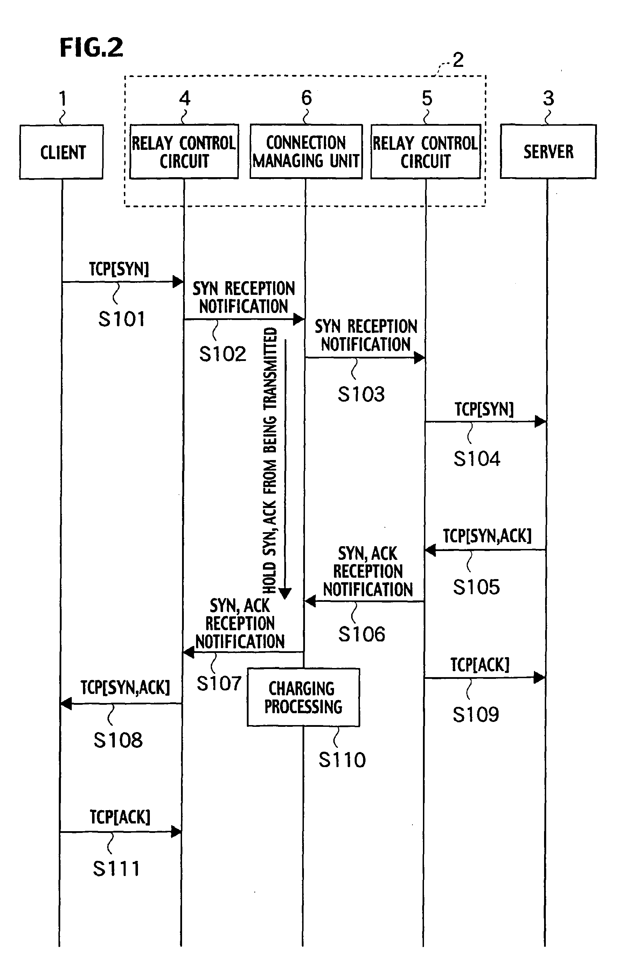

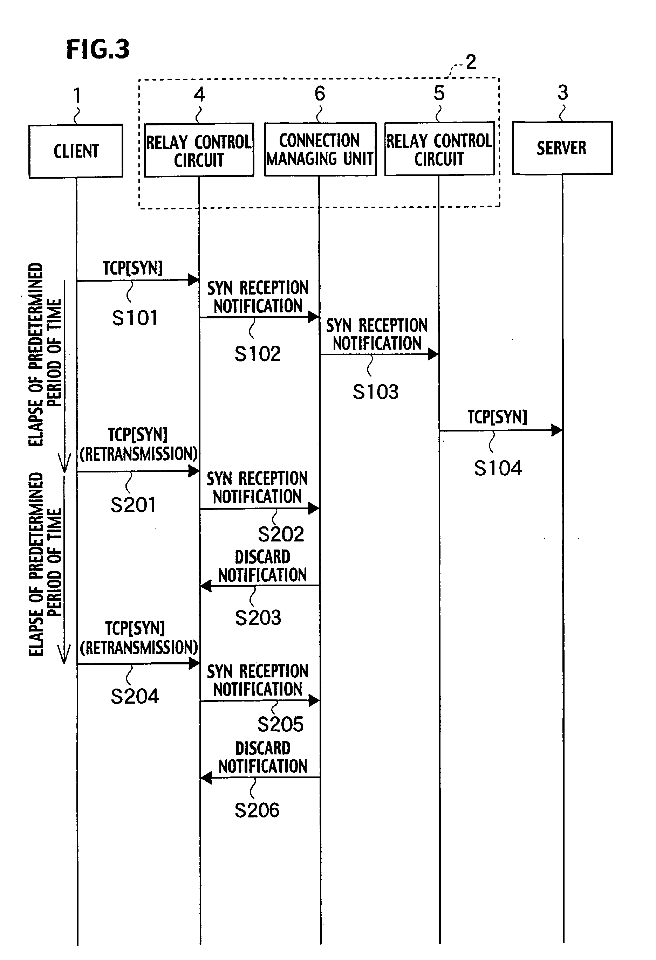

A description will be given of a communication control method using the communication control system according to the present embodiment having the above-described configuration, with reference to Figs. 2 and 3.

Fig. 2 is a sequence diagram showing operation of the communication control system according to the present embodiment. In Fig. 2, shown is the establishment of a TCP connection among the client 1, the relay device 2 and the server 3.

In the communication control system according to the present embodiment, before the client 1 transmits a relay request signal (data signal) to the server 3 via the relay device 2, a TCP connection is established between the client 1 and the relay device 2, and thereafter, a TCP connection is established between the relay device 2 and the server 3.

Specifically, in Step 101, the client 1 transmits a TCP connection establishment request signal "TCP [SYN]" to the relay control circuit 4 of the relay device 2.

In Step 102, when the TCP connection establishment request signal "TCP [SYN]" is inputted via the client-side connection terminal 7, the relay control circuit 4 transmits to the connection managing unit 6 a "SYN reception notification" for notifying the reception of the TCP connection establishment request signal "TCP [SYN]".

In Step 103, the connection managing unit 6 forwards the received SYN reception notification to the relay control circuit 5.

More specifically, first, the data transmitting/receiving unit 61 acquires the SYN reception notification from the relay control circuit 4, and sends this acquired SYN reception notification to the relay processing unit 63.

Second, the relay processing unit 63 analyzes the contents of the SYN reception notification, analyzes whether or not the TCP connection establishment request signal "TCP [SYN]" related to the acquired SYN reception notification is the first signal (not a retransmitted signal), and sends the result of this analysis to the deciding unit 64. At the same time, the relay processing unit 63 instructs the establishment holding unit 66 to hold the TCP connection establishment request signal "TCP [SYN]" in question.

As a result, the relay control circuit 4 holds the TCP connection establishment request/acknowledgment signal "TCP [SYN, ACK]" from being transmitted to the client 1 during Steps 102 to 107, that is, until a TCP connection is established between the server-side connection terminal 8 and the server 3 and also a "SYN, ACK reception notification" arrives from the connection managing unit 6.

Third, the relay processing unit 63 instructs the notification processing unit 65 to transmit the SYN reception notification to the relay control circuit 5. In response to this instruction, the notification processing unit 65 forwards the SYN reception notification in question to the relay control circuit 5 (the server-side connection terminal 8) via the data transmitting/receiving unit 62.

Upon receiving the SYN reception notification, the relay control circuit 5 transmits to the server 3 a TCP connection establishment request signal "TCP [SYN]" related to the SYN reception notification in question, in Step 104.

At this time, if the server 3 exists and a condition is such that a TCP connection can be established between the relay device 2 and the server 3, then the relay control circuit 5 receives a TCP connection establishment request/acknowledgment signal "TCP [SYN, ACK]", which is an acknowledgment of a TCP connection establishment, from the server 3 via the server-side connection terminal 8 in Step 105.

The relay control circuit 5 that has received the TCP connection establishment request/acknowledgment signal "TCP [SYN, ACK]" transmits a TCP connection establishment acknowledgment signal "TCP [ACK]" to the server 3 via the server-side connection terminal 8 in Step 109. In Step 106, the relay control circuit 5 also transmits to the connection managing unit 6 a "SYN, ACK reception notification" which indicates that the TCP connection establishment request/acknowledgment signal "TCP [SYN, ACK]" has been received.

In Step 107, the connection managing unit 6 that has received the SYN, ACK reception notification forwards the SYN, ACK reception notification to the relay control circuit 4.

More specifically, first, the data transmitting/receiving unit 62 acquires from the relay control circuit 5 the "SYN, ACK reception notification" indicating that the TCP connection establishment request/acknowledgment signal "TCP [SYN, ACK]" has been received, and then sends this acquired "SYN, ACK reception notification" to the relay processing unit 63.

Second, the relay processing unit 63 analyzes the contents of the "SYN, ACK reception notification", analyzes whether or not the TCP connection establishment request/acknowledgment signal "TCP [SYN, ACK]" related to this acquired "SYN, ACK reception notification" is a response signal from the server 3, and sends the result of this analysis to the deciding unit 64.

The deciding unit 64 decides whether or not a TCP connection has been established between the client 1 and the server 3, based on the earlier acquired result of the analysis based on the SYN reception notification from the relay control circuit 4, and on the this-time acquired result of the analysis based on the SYN, ACK reception notification from the relay control circuit 5. The deciding unit 64 outputs the result of this decision to the relay processing unit 63, and also, in Step 101, has the charging processing unit 68 execute charging processing on the client 1.

The relay processing unit 63, based on the result of this decision, instructs the notification processing unit 65 to transmit the "SYN, ACK reception notification" to the relay control circuit 4. In Step 107, in response to this instruction, the notification processing unit 65 transmits the SYN, ACK reception notification to the relay control circuit 4 via the data transmitting/receiving unit 61.

In Step 108, the relay control circuit 4 transmits a TCP connection establishment request/acknowledgment signal "TCP [SYN, ACK]" to the client 1 via the client-side connection terminal 7.

In Step 111, in response to the TCP connection establishment request/acknowledgment signal "TCP [SYN, ACK]", the client 1 transmits a TCP connection establishment acknowledgment signal "TCP [ACK]" to the relay control circuit 4 (the client-side connection terminal 7).

Fig. 3 is a sequence diagram showing operation of the communication control method according to the present embodiment in the case where the server 3, the destination of the connection for the client 1, does not exist, or where a TCP connection cannot be established between the relay device 2 and the server 3.

As shown in Fig. 3, in Step 101, the client 1 transmits a TCP connection establishment request signal "TCP [SYN]" to the relay device 2.

In Step 102, when the TCP connection establishment request signal "TCP [SYN]" is inputted via the client-side connection terminal 7, the relay control circuit 4 transmits to the connection managing unit 6 a "SYN reception notification" for notifying the reception of the TCP connection establishment request signal "TCP [SYN]".

In Step 103, the connection managing unit 6 forwards the received SYN reception notification to the relay control circuit 5.

More specifically, first, the data transmitting/receiving unit 61 acquires the SYN reception notification from the relay control circuit 4, and sends this acquired SYN reception notification to the relay processing unit 63.

Second, the relay processing unit 63 analyzes the contents of the SYN reception notification, analyzes whether or not the TCP connection establishment request signal "TCP [SYN]" related to the acquired SYN reception notification is the first signal (not a retransmitted signal), and sends the result of this analysis to the deciding unit 64. At the same time, the relay processing unit 63 instructs the establishment holding unit 66 to hold the TCP connection establishment request signal "TCP [SYN]" in question.

As a result, a TCP connection establishment request/acknowledgment signal "TCP [SYN, ACK]" is held from being transmitted to the client 1. In other words, a SYN, ACK reception notification is held from being transmitted to the relay control circuit 4.

Moreover, the relay processing unit 63 instructs the notification processing unit 65 to transmit the SYN reception notification to the relay control circuit 5. In response to this instruction, the notification processing unit 65 forwards the SYN reception notification to the relay control circuit 5 via the data transmitting/receiving unit 62.

In Step 104, the relay control circuit 5, in response to the received SYN reception notification, transmits a TCP connection establishment request signal "TCP [SYN]" to the server 3 via the server-side connection terminal 8.

Note that, since the server 3 does not exist or a TCP connection cannot be established between the relay device 2 and the server 2 here, a TCP connection establishment request/acknowledgment signal "TCP [SYN, ACK]" will not be transmitted from the server 3 in response to the TCP connection establishment request signal "TCP [SYN]" transmitted in Step 104.

Since the server 3 does not transmit the TCP connection establishment request/acknowledgment signal "TCP [SYN, ACK]" to the relay control circuit 5 via the server-side connection terminal 8, a SYN, ACK reception notification is not transmitted from the relay control circuit 5 to the connection managing unit 6 either, and communications are not performed thereafter.

Accordingly, in Step 201, as time-up processing, the client 1 retransmits a TCP connection establishment request signal "TCP [SYN]" to the relay control circuit 4 (the client-side connection terminal 7) after a predetermined period of time has elapsed.

In Step 202, when the relay control circuit 4 receives the TCP connection establishment request signal "TCP [SYN]" retransmitted, the relay control circuit 4 transmits to the connection managing unit 6 a SYN reception notification for notifying that the TCP connection establishment request signal "TCP [SYN]" has been received again.

In Step 203, the connection managing unit 6 instructs to discard the TCP connection establishment request signal "TCP [SYN]" held by the establishment holding unit 66.

More specifically, first, the data transmitting/receiving unit 61 acquires the SYN reception notification from the relay control circuit 4, and sends the acquired SYN reception notification to the relay processing unit 63.

Second, the relay processing unit 63 analyzes the contents of the acquired SYN reception notification, analyzes whether or not the TCP connection establishment request signal "TCP [SYN]" related to the acquired SYN reception notification is a retransmitted signal, and sends the result of this analysis to the deciding unit 64.

Third, the deciding unit 64 decides that a TCP connection has not been established between the client 1 and the server 3, based on the earlier acquired result of the analysis based on the SYN reception notification from the relay device 4, and on the this-time acquired result of the analysis based on the SYN reception notification from the relay device 4. The deciding unit 64 then outputs the result of this decision to the relay processing unit 63.

Fourth, based on the result of this decision, the relay processing unit 63 instructs the discard processing unit 67 to discard the TCP connection establishment request signal "TCP [SYN] " held by the establishment holding unit 66. At the same time, the relay processing unit 63 instructs the notification processing unit 65 to transmit a discard notification to the relay control circuit 4.

Fifth, in response to this instruction, the notification processing unit 65 transmits the discard notification to the relay control circuit 4 via the data transmitting/receiving unit 61.

Note that the client 1 retransmits a TCP connection establishment request signal "TCP [SYN] " until a TCP connection is established between the client 1 and the server 3 (see Steps 204 and 205), in which case the connection managing unit 6 transmits discard notifications to the client 1, as shown in Step 206, as long as the server 3 does not exist or a TCP connection cannot be established between the relay device 2 and the server 3.

(Operation and Effect of the Communication Control System according to the Present Embodiment)

According to the communication control system of the present embodiment, processing of relaying a data signal can be executed only when both TCP connections between the client 1 and the relay device 2 and between the relay device 2 and the server 3 have been established. Therefore, it can be avoided that a resource is unnecessarily reserved even when the server 3 does not exist or a TCP connection to the server 3 cannot be established.

Moreover, according to the communication control system of the present embodiment, it can be avoided to charge the client 1 even when a TCP connection is not established between the relay device 2 and the server 3, whereby it is possible to realize fair charging processing.

Further, according to the communication control system of the present embodiment, it is possible to confirm the establishment of a TCP connection to the server 3, for example, based on a response signal from the server 3, such as the TCP connection establishment acknowledgment signal "TCP [ACK]". Therefore, it is possible to decide further reliably whether or not a TCP connection is established between the relay device 2 and the server 3.

Furthermore, according to the communication control system of the present embodiment, it is possible to release an unnecessary queued state on the client 1 side by means of a discard notification, whereby it is possible to proceed to subsequent processing promptly.

### (Computer-Readable Recording Medium Storing a Communication Control Program according to the Present Embodiment)

The communication control system and the communication control method described above can be realized by executing a communication control program written in a predetermined computer language on a general-purpose computer, such as a personal computer, installed in a base station or control station.

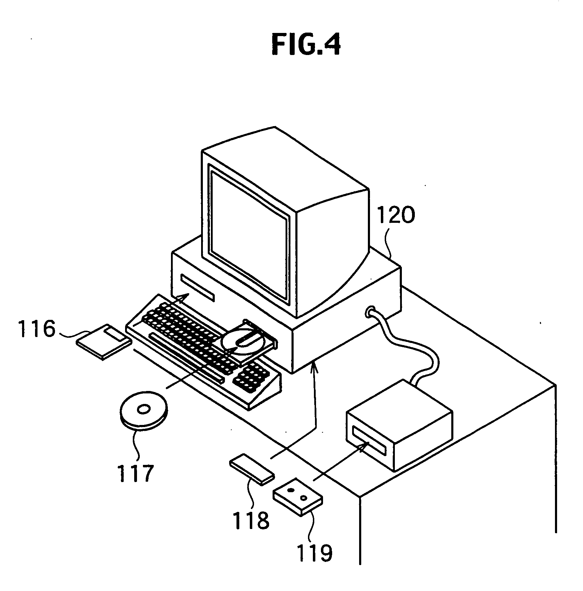

In addition, a data management program is recorded on a recording medium (a flexible disk 116, an optical recording medium 117 such as a CD-ROM or DVD-ROM, a RAM 118, or a cassette tape 119) which can be read by a computer 120 as shown in Fig. 4, and is installed onto the computer 120 through such a recording medium as mentioned above, whereby it is possible to realize the devices described through the foregoing embodiment. Further, by means of the above-mentioned recording media, software can be easily stored, carried and transferred.

Additionally, such a communication control program can be transferred, sold, and so on, by using means for transmitting the program through a communication network, and the like.

### INDUSTRIAL APPLICABILITY

As described hereinabove, according to the present invention, the relay device decides whether or not to accept a connection request signal from the client 1 after determining the communication state on the server 3 side. Thus, it will be possible to save the memory resource of the relay device and to reduce the communication amount on the client side.

## Claims

1. A communication control system, comprising:
a server connected to a communication network;
a client configured to make a connection request to the server through the communication network;
a relay device configured to include a server-side connection terminal connected to the server and a client-side connection terminal connected to the client, and to relay communications between the server and the client;
an establishment holder configured to hold a response signal from being transmitted from the client-side connection terminal to the client, when the client-side connection terminal receives a connection request signal from the client;
a decider configured to detect a connection state of the server-side connection terminal in response to the connection request signal, and to decide whether or not a connection can be established between the server-side connection terminal and the server; and
a relay processor configured to transmit the response signal held by the establishment holder, and to establish communications between the client and the server so as to perform relay processing, depending on a result of decision made by the decider.

2. The communication control system according to claim 1, further comprising a charging processor configured to execute charging processing on the client, when communications are established between the server and the server-side connection terminal, and when communications are established between the client and the client-side connection terminal.

3. The communication control system according to claim 1, wherein the decider is configured to forward the connection request signal from the client to the server, and to decide whether or not communications can be established between the server-side connection terminal and the server, based on a response signal transmitted from the server in response to the forwarding.

4. The communication control system according to claim 1, further comprising a discard processor configured to release the holding state of the establishment holder, and to transmit a discard notification to the client via the client-side connection terminal, when communications are not established between the server-side connection terminal and the server.

5. A communication control method for controlling communications between a client and a server through a relay device, the method comprising:
holding a response signal to the client when receiving a connection request signal from the client, in the relay device;
detecting a connection state of the server-side connection terminal in response to the connection request signal, and deciding whether or not a connection can be established between the relay device and the server, in the relay device; and
transmitting the response signal held, and establishing communications between the client and the server so as to perform relay processing, when it is decided that communications are established between the relay device and the server, in the relay device.

6. A relay device which relays communications between a client and a server, comprising:
a client-side connection terminal connected to the client;
a server-side connection terminal connected to the server;
an establishment holder configured to hold a response signal from being transmitted from the client-side connection terminal to the client, when the client-side connection terminal receives a connection request signal from the client;
a decider configured to detect a connection state of the server-side connection terminal in response to the connection request signal, and to decide whether or not a connection can be established between the server-side connection terminal and the server; and
a relay processor configured to transmit the response signal held by the establishment holder, and to establish communications between the client and the server so as to perform relay processor, depending on a result of decision made by the decider.

7. The relay device according to claim 6, further comprising a charging processor configured to execute charging processing on the client, when communications are established between the server and the server-side connection terminal, and when communications are established between the client and the client-side connection terminal.

8. The relay device according to claim 6, wherein the decider is configured to forward the connection request from the client to the server, and to decide whether or not communications can be established between the server-side connection terminal and the server, based on a response signal transmitted from the server in response to this forwarding.

9. The relay device according to claim 6, further comprising a discard processor configured to release the holding state of the establishment holder, and to transmit a discard notification to the client via the client-side connection terminal, when communications are not established between the server-side connection terminal and the server.
